# EUROPEAN PATENT SPECIFICATION

(11) **EP 2 445 358 B1**
(45) Date of publication and mention of the grant of the patent: **02.08.2017**
(21) Application number: 10792389.8
(22) Date of filing: 24.06.2010
(51) Int. Cl.: A23K 20/179, A23K 50/80

(54) **FEED ADDITIVE FOR IMPROVED PIGMENT RETENTION**
LEBENSMITTELZUSATZ FÜR VERBESSERTE PIGMENTERHALTUNG
ADDITIF ALIMENTAIRE AMÉLIORANT LA RÉTENTION PIGMENTAIRE

(30) Priority: 25.06.2009 NO 20092428
(43) Date of publication of application: 02.05.2012
(73) Proprietor: TROUW INTERNATIONAL B.V., 5831 JN Boxmeer (NL)
(72) Inventor: KOPPE, Wolfgang, M., N-4011 Stavanger (NO); BAARDSEN, Gunvor, Kristin, Lien, N-4021 Stavanger (NO); MÖLLER, Niels, Peter, 24214 Schinkel (DE)
(74) Representative: Håmsø, Gunnar
(86) International application number: PCT/NO2010/000248
(87) International publication number: WO 2010/151147

(56) References cited:
- EP-A2- 1 250 850
- WO-A1-2004/006687
- WO-A1-2004/006687
- WO-A2-2008/080152
- JP-A- 8 332 052
- JP-A- 2002 218 940
- JP-A- 2002 218 940
- JP-A- 2006 050 901
- US-A1- 2006 171 995
- SIGURGISADOTTIR S. ET AL: 'Effects of feeding natural tocopherols and astaxanthin on Antlantic salmon (Salmo salar) fillet quality' FOOD RESEARCH INTERNATIONAL vol. 27, 1994, pages 23 - 32, XP055102507

## Description

The invention relates to a feed for salmonids. More particularly, it relates to a feed containing water-soluble anti-oxidants selected from a group consisting of gallic acid and syringic acid, which increase the retention of pigment in the flesh of salmonids.

Salmonids are unique among fishes in their ability to deposit carotenoids in the fish meat giving these fishes characteristic red-coloured muscles. By salmonids is meant fish species belonging to the family of Salmonidae. Examples of such fish species are salmon (*Salmo salar*) and sea trout (*S. trutta trutta*), and pacific salmon such as silver salmon (coho) (*Oncorhynchus kisutch*), Chinook salmon (*O. tshawytscha*), humpback salmon (*O. gorbuscha*), chum salmon (*O*. *keta*), red salmon (sockeye) (*O*. *nerka*) and rainbow trout (*O*. *mykiss*). In wild salmonids it is the carotenoid astaxanthin (3,3'-dihydroxy β, β-carotene-4,4'-dion), which mainly causes the reddish colour.

Farmed salmon including pacific salmon, rainbow trout and trout are fed a feed with added natural identical pigments such as carotenoides, particularly astaxanthin but also canthaxanthin, or a combination of the two pigments. Farmed salmon has become a common foodstuff well known to consumers in many countries. The consumer uses the fish meat colour to evaluate the quality of the product. There is a connection, if not linear, between the amount of chemical astaxanthin in the fish meat and the colour intensity and colour saturation of the meat. A high level of astaxanthin, for example 6-8 mg astaxanthin per kg meat (ppm) will thus be experienced as a strong reddish colour, while a low content of astaxanthin, for example 3-4 ppm will be experienced as a pale and less attractive reddish meat colour.

The amount of astaxanthin in the salmon fish meat is an important quality parameter for the fish farmer. As mentioned the astaxanthin is given to the fish as an additive in the feed. Astaxanthin is a relatively costly feed additive, which has amounted to 15 - 20 % of the total raw material cost (Torrissen, O. J. (1995). Strategies for salmonid pigmentation. J Appl. Ichtyol. 11: 276-281).

By deposition, retention or pigmentation is meant the same here, i.e. the amount of astaxanthin measured chemically in the fish muscles. The chemical measurement gives the result as mg astaxanthin per kg fish muscle (wet weight). This may also be given as ppm.

It has turned out that only up to 15% of added astaxanthin in the feed is actually deposited in the fish meat (Torrissen, O. J. 1989. Pigmentation of salmonids: Interactions of astaxanthin and canthaxanthin on pigmentation deposition in rainbow trout. Aquaculture 79: 363-374). It has therefore been a long felt problem to be able to increase the deposition of astaxanthin in the salmonid muscles as even a small increase may give considerable savings in feed cost.

It has been reported that astaxanthin is necessary for growth and survival for alevin of salmon (*S. salar*) and astaxanthin should be added to all fish feed in an amount of at least 10 mg/kg feed. (Torrissen and Christiansen, 1995, Growth and survival of Atlantic salmon, Salmo salar L. fed different dietary levels of astaxanthin. First feeding fry. Aquaculture Nutrition 1: 189-198). To increase the amount of astaxanthin in the muscles it is necessary that the feed contains at least 15 - 25 mg astaxanthin/kg feed, depending on many factors, including growth conditions. Commercial fish feed for salmonids contains normally between 20 and 70 mg astaxanthin per kg feed. The authorities have set an upper limit of 100 ppm astaxanthin for addition of astaxanthin in fish feed.

In commercial fish farming of salmon it is common to apply levels of astaxanthin of between 40 ppm and 70 ppm when it is desirable to increase the amount of chemical astaxanthin in the fish muscles. After having reached the desired level, the level of astaxanthin in the feed is reduced to a so-called maintenance level. This may be between 20 and 30 ppm.

Astaxanthin is an anti-oxidant having a strong "quenching effect" towards singlet oxygen, and astaxanthin has a strong scavenging effect towards free radicals (Miki 1991. Biological functions and activities of animal carotenoids. Pure Appl. Chem., 63: 141-146). This indicates that astaxanthin has an important biological role.

Due to the significance of the astaxanthin for quality evaluation of salmonids and as a cost factor in commercial fish farming, considerable research work has been carried out to improve the understanding of mechanisms for stability of astaxanthin in the fish feed, absorption of astaxanthin in the intestines, the metabolism of the astaxanthin in the fish and deposition mechanisms in the fish muscle. This is *inter alia* made visible in a large number of research articles. It is known that the mechanisms vary between different species of salmonids. The nature identical carotenoid canthaxanthin (β,β-carotene-4,4'-dion) is used as a more reasonable alternative to astaxanthin, but it gives a more yellowish fish meat. Both pigments belong to the group xanthophylls within the carotenoids. It is described that the retention of canthaxanthin in rainbow trout (*O*. *mykiss*) is poorer than the retention of astaxanthin. In salmon *(S. salar)* this is opposite in that the retention of astaxanthin is poorer than for canthaxanthin (Buttle et al. 2001. The effect of feed pigment type on flesh pigment deposition and colour in farmed Atlantic salmon, Salmo salar L., Aquaculture Research, 32, 103-111). Caution must therefore be exercised in transferring results from tests on rainbow trout to salmon. In salmon it is shown that retention decreases with increasing amount of astaxanthin in the feed (Bjerkeng et al. 1999. Astaxanthin deposition in fillets of Atlantic salmon, Salmo salar L. fed two dietary levels of astaxanthin in combination with three levels of α-tocopheryl acetate. Aquaculture Research 30, 637-646) however, the total content of chemical astaxanthin in the fish muscle increases with increasing amount of added astaxanthin. There may be different mechanisms explaining this, but it means that results achieved with a high addition level of astaxanthin will not necessarily be valid for a low addition level. By a low addition level is meant that the feed contains 10 to 30 ppm of astaxanthin. A medium level corresponds to 40 to 60 ppm and a high level corresponds to more than 60 ppm astaxanthin in the feed. It has also been shown that the fat content in the feed is of importance for the retention of astaxanthin. Astaxanthin is partly fat-soluble and retention increases with increasing amount of fat (Bjerkeng et al. 1997, Quality parameters of the flesh of Atlantic salmon (Salmo salar) as affected by dietary fat content and full-fat soybean meal as a partial substitute for fish meal in the diet. Aquaculture 157, 297-309). A feed containing less than 15 percent fat by weight has a very low level of fat and is unsuited for feeding of salmonids. Feed containing between 15 and 20 percent fat by weight have a low level of fat. Feed containing between 20 and 30 percent fat by weight have a medium level of fat. Feed containing between 30 and 35 percent fat by weight have a high fat content, and feed containing more than 35 percent fat by weight have a very high fat content. This means that results achieved with a feed containing very little fat cannot be directly transferred to a situation wherein the fish is fed with a feed containing medium, high or very high fat contents. It is also known that fat-soluble vitamin E under some circumstances can improve the pigmentation in salmon (Bjerkeng et al. 1999. Astaxanthin deposition in fillets of Atlantic salmon, Salmo salar L. fed two dietary levels of astaxanthin in combination with three levels of α-tocopheryl acetate. Aquaculture Research 30, 637-646; Christiansen et al. 1993. Effects of polyunsaturated fatty acids and vitamin E on flesh pigmentation in Atlantic salmon (Salmo salar). Fish nutrition in practice, Biarritz, June 24-27, 1991. Ed. INRA Les Colloques, n° 61).

Season and/or time in the sea relative to life cycle have turned out to be of importance for the speed of pigmentation. This is shown among others by Torrissen et al., 1995. Astaxanthin deposition in the flesh of Atlantic salmon, Salmo salar L., in relation to dietary astaxanthin concentration and feeding period. Aquacult. Nutr. 1:77-84, Nordgarden et al., 2003 Seasonal changes in selected muscle quality parameters in Atlantic salmon, (Salmo salar L.) reared under natural and continuous light. Aquacul Nutr. 9: 161-168 and Ytrestøyl et al., 2008. Utilisation of astaxanthin in Atlantic salmon from seawater transfer to slaughter. XIII International Symposium on Fish Nutrition and Feeding. June 1-5'th. It is pointed out here that growth rate has importance for astaxanthin retention and that water temperature plays a part for the astaxanthin concentration in plasma.

Normally the astaxanthin level in salmonids will increase with increasing fish weight. This is shown in a. o. Torrissen et al, 1995. Astaxanthin deposition in the flesh of Atlantic salmon, Salmo salar L., in relation to dietary astaxanthin concentration and feeding period. Aquacult. Nutr. 1:77-84 and Torrissen & Naevdal, 1998. Pigmentation of salmonids - variation in flesh carotenoids of Atlantic salmon. Aquaculture 101, 305-310.

In its original and widest sense extrusion means to create an object having a fixed cross-sectional profile. This is done by pulling or forcing a formable material through a die opening having the desired cross-section. In the foodstuff industry and feed industry, especially in the fish feed industry, the term extrusion is used in a narrower sense. In these industries so-called extruders of the single screw or double screw type are used. The extruded material is a mixture of protein raw materials, starch containing raw materials, fat for example in the form of oils, and water. The water may be added to the mixture in the form of water or steam. In addition the mixture may consist of minerals and vitamins and possibly of pigment. The mixture may be preheated in a so-called preconditioner where the heating takes place by addition of steam to the mixture. Steam and water may also be added to the substance inside the extruder. In the extruder itself the dough like substance is forced by means of the screws toward a constriction in the outlet end of the extruder and on through a die plate where the substance gets a desired cross-sectional shape. On the outside of the die plate is normally a rotating knife cutting the string coming out of the die holes into desired length. Normally the pressure on the outside of the die plate will be equal to the surrounding pressure. The extruded product is referred to as extrudate. Due to the pressure created inside the extruder, and the addition of steam to the substance, the temperature is above 100°C and the pressure will be above atmospheric pressure in the substance before it is forced out through the die openings. This extrusion process is also termed cooking extrusion.

Cooking extrusion of material containing starch causes the starch granules to swell such that the crystalline starch in the granules is released and may unfold. This is referred to as gelatinisation of the starch. The starch molecules will form a network contributing to bind the extrudate together. Particularly in the feed for carnivorous fish starch containing raw materials are added due to their ability as binding agents in the finalised fish feed. The natural prey for carnivorous fish does not contain starch. Carnivorous fish have small amounts of enzymes able to change starch to digestible sugar. Cooking of the starch makes it more digestible. This is partly due to the starch no longer being in a raw, crystalline form, and partly that the cooking process starts a decomposition of starch into smaller sugar units, which are easier to digest.

Another effect of cooking extrusion on the mixture of protein, carbohydrates and fat, is that these will form complexes and bindings that may have both positive and negative effects on the digestivity of the mixture.

A further effect of cooking extrusion is that the extrudate becomes porous. This is due to the pressure drop and the temperature drop over the die opening. The water in the extrudate will immediately expand and be liberated as steam leaving a porous structure in the extrudate. This porous structure may be filled with oil in a later process step. An extruded feed will typically contain between 18 and 30% water after extrusion. After extrusion this feed goes through a drying step and a following step of oil coating. The end product contains about 10% of water or less and will thus be storage stable as the water activity is so low in such feeds, that growth of fungus and mould is prevented and also that bacterial decay is avoided. After coating with oil the feed is cooled and packed.

By extrusion is in the following meant cooking extrusion either by means of a single screw extruder or a double screw extruder. By an extruded feed is meant a feed produced by cooking extrusion either by means of a single screw extruder or a double screw extruder.

By a pressed feed is meant a feed produced by means of a feed press. This process differs from extrusion in several ways. There is used less water and steam in the process. The feed mixture is forced through a die ring from the inside out by means of rollers rotating on the inside of the die ring. Temperature and pressure are lower than in extrusion, and the product is not porous. The process entails that the starch is not as digestive as after extrusion. A pressed feed will normally contain less than 10% of water after pressing and any oil coating. It is not necessary to dry a pressed feed. The feed is cooled prior to packing.

By a formulated fish feed is meant a feed composed of one or more protein sources such as, but not limited to, marine protein such as fishmeal and krill meal, vegetable protein such as soy meal, rape seed meal, wheat gluten, corn gluten, lupine meal, pea meal, sunflower seed meal and rice meal, and slaughterhouse waste such as blood meal, bone meal, feather meal and chicken meal. By mixing different protein sources, each having its own amino acid profile, it is possible within certain limits to achieve a desired amino acid profile in the feed adapted to the species of fish the feed is intended for.

A formulated feed further contains such as fish oil and/or vegetable oils such as rapeseed oil and soy oil as an energy source. A formulated feed also contains a binder, usually in the form of a raw material rich in starch, such as wheat or wheat flour, potato flour, rice, rice flour, pea flour, beans or tapioca flour to give the feed the desired strength and form stability.

A formulated feed further contains minerals and vitamins necessary to take care of good growth and good health for the fish. The feed may further contain further additives such as pigments, to achieve certain effects.

A formulated fish feed is thus a composite feed where the relative amounts between proteins, fat, carbohydrates, vitamins, minerals and any other additives is calculated to be optimally adapted to the nutritional needs of the species of fish based on the age of the fish. It is common that feeding is done with only one type of feed and with that every piece of feed is nutritionally adequate.

By a dry, formulated feed is meant a feed of the pressed or extruded type.

The person versed in the art will know that there may be conditions leading to deviations between a desired value for a feed component in a recipe and actual value for the component in the produced feed. Thus too little drying or too much drying of the feed in the production process leads to the other components being "thinned out" or "concentrated" respectively. Correspondingly will too much or too little oil addition to the dried feed lead to "thinning out" or "concentration" of the other ingredients respectively. A few sensitive feed components, such as astaxanthin, may even be partly destroyed in the feed production process, for example in the extrusion step or in the drying step. This is referred to as so-called process loss. In addition the amount of sensitive feed components may be reduced in storage of the feed, so-called storage loss. In formulating a fish feed allowance is made for these conditions, for example by adding more astaxanthin than the desired level of astaxanthin should call for. In analysis of astaxanthin in a fish feed it may thus be found that the actual value differs by either being lower than declared or higher than declared. Thus a fish feed declared to contain 10 ppm astaxanthin, may contain less than 10 ppm astaxanthin and correspondingly a fish feed declared to contain 40 ppm astaxanthin might contain more than 40 ppm astaxanthin. A negative deviation, i.e. "less than", may as a rule be larger than a positive deviation.

Polyphenols is a large and complex group of natural substances found in plants. In the following the classification given by Belitz and Grosch (1999) in Food Chemistry, 764-775. Springer, second edition, is used as basis. These authors divides the phenol substances in:
1) Hydroxycinnamic acids, hydroxycoumarines and hydroxybenzoic acids. It is to be noted that others use the term phenol carboxyl acids as a common term for these three groups;
2) Flavan-3-ols (chatecines), flavan-3,4-ols and proanthocyanidines (condensed tanning agents);
3) anthocyanidines;
4; flavanones; and
5) flavones and flavonols
It is to be noted that the groups 2-5 by many are grouped together in one main group called flavonoids.

Ferulic acid (3-(4-hydroxy-3-metoxyphenol)prop-2-enoic acid) is a representative of the group hydroxycinnamic acids. Gallic acid (3,4,5-hydroxybenzoic acid) and syringic acid (4-hydroxy-3,5-dimetoxybenzoic acid) are representatives of hydroxybenzoic acids.

Patent document EP 1284101 gives an account of use of polyphenols of the type flavonoids, more particularly proanthocyanidins in combination with carotenoids in fish feeds to improve the colour in fish skin and in fish meat. More particularly is 0.004 - 0.02 percent by weight of astaxanthin used in the feed. This is equal to from 40 to 200 mg of astaxanthin per kg feed, which may also be given as 40 to 200 ppm. In one example with rainbow trout the fish was fed for two months with a feed composed of 60% fish meal, 24% wheat flour, 10% soy oil cake and 6% of other ingredients including fat and calcium phosphate. A person versed in the art of fish nutrition will with the aid of standard nutrition tables find that this feed had a composition of main components equal to approximately 46-47% protein, 13-15% fat, 9.2-9.4% ash and approx. 1.8% fibre if values for full fat soy or extracted Soybean meal are used for soy oil cake. In the patent document it is mentioned in table 2 that the composition of main components lies within the following limits: raw protein > 46%, raw fat > 12% and raw ash < 17%. To this feed 80 ppm of astaxanthin was added. In the experimental feed an additional 0.1% of the commercial product KPA-F from Kikoman K.K. was added. It is mentioned that this product contains 16% proantocyanidin. Converted this equals that the feed contains 160 ppm of proantocyanidin. Patent document WO2001/095747 mentions that the proantocyanidin in this product is a common extract of grapefruit seeds. At the end of the experiment a chemical content of 6.57 ppm of astaxanthin in the muscle for the group getting astaxanthin and 8.25 ppm in the muscle for the group getting proantocyanidin in addition was measured.

In another example the fish was fed the commercial product Tennen Shiageyou 5p sold by Nippon Haigoou Shiryo K.K. This is a pressed feed. The composition of this feed was 54% fishmeal, 39% wheat and extracted soybeans, 5% rice bran and 2% calcium phosphate, salt and canthaxanthin. The composition of main components for this feed was raw protein > 46%, raw fat > 7% and raw ash < 13%.

The amount of astaxanthin in the feed is not specified, but is assumed to be as in example 1, i.e. 80 ppm. The amount of proantocyanidin was 160 ppm.

JP8332052 teaches to use flavanol in combination with kojic acid to stabilise the colour in for example ground fish meat, health foods and fish feed. This patent document does not teach that the combination of astaxanthin, flavanol and kojic acid in the fish feed should increase the retention of astaxanthin in the fish muscle and the person versed in the art may not deduce such an effect from this patent document.

JP2006-50901-A / WO 2004/006687 relates to a feed, including fish feed, containing carotenoid, including astaxanthin, phenol propanoid, including ferulic acid and phytic acid. The patent document shows that the mixture has an advantageous stabilising effect of astaxanthin in feeds. The patent document does not document that the feed is given to fish. The person versed in the art may not deduce from this patent document that ferulic acid alone or in combination with the other additives should give an increased retention of astaxanthin in fish muscle.

JP2005-176799-A relates to a fish feed containing astaxanthin and ferulic acid and gamma-oryzanol. The patent document shows that the mixture of ferulic acid and gamma-oryzanol acts as stabiliser on astaxanthin in fish feed as shown in table 6. The patent document further shows that the combination has a favourable effect on the skin colour of sea bream when the feed contains 60 ppm astaxanthin. Most of this effect is due to the additives preventing or reducing the production of melanin so that the colours become brighter. Chemical analysis of the fish skin shows an increase in the level of astaxanthin of approx. 10% at a combination of 50 ppm ferulic acid and 100 ppm gamma-oryzanol as shown in table 4. Addition of only 100 ppm ferulic acid gave no increase, and 1000 ppm ferulic acid gave a mild increase. The person versed in the art may not deduce from this patent document that ferulic acid should give an increased retention of astaxanthin in fish muscle.

JP 2002 218940 relates to a solution containing gallic acid to stabilize the colour of a fish fillet after the fish has been killed, frozen and defrosted.

The object of the invention is to remedy or reduce at least one of the disadvantages of the prior art.

The object is achieved by virtue of the features disclosed in the below description and in the following claims.

In a first aspect the invention relates to an extruded, formulated fish feed which contains less than 10 percent by weight of ash, more than 20 percent by weight of fat, less than 20 percent by weight of a starch containing raw material, and astaxanthin. The fish feed contains at least one water soluble antioxidant selected from a group consisting of gallic acid (3,4,5- hydroxybenzoic acid) and syringic acid (4-hydroxy-3,5-dimetoxybenzoic acid), wherein the water-soluble antioxidant is present in an amount of from 10 to 75 ppm or an amount of from 76 to 750 ppm based on the total weight of the feed. The fish feed contains from 10 to 40 mg astaxanthin per kg feed.

Said pigment may be a natural identical astaxanthin, especially synthetic astaxanthin. Said pigment may further be selected from the group consisting of natural astaxanthin and synthetic astaxanthin.

Said fish feed may further contain more than 25% fat. This has the advantage that the fish feed is suitable for feeding of farmed salmonids. Said fish feed may in an alternative embodiment contain more than 30% fat and in a further alternative embodiment contain more than 33% fat.

In a second aspect the invention relates to a method to increase a retention of astaxanthin in the flesh of salmonids by the fish being fed with a feed according to the description above.

In the following are described examples of preferred embodiments illustrated in the accompanying figures wherein:
- Fig. 1: shows the retention of astaxanthin in fish muscle given as % of amount added astaxanthin in the feed at three different levels of astaxanthin combined with four different levels of gallic acid in the feed and compared with a control feed without gallic acid;
- Fig. 2: shows the retention of astaxanthin in fish muscle given as chemical amount of astaxanthin in fish muscle at two different levels of astaxanthin in feed for a control feed and feed with low and medium inclusion level of ferulic acid; and
- Fig. 3: shows retention of astaxanthin in fish muscle given as chemical amount of astaxanthin in fish muscle at two different levels of astaxanthin in feed for a control feed and feed with low and medium inclusion level of syringic acid.

### Example 1

The test was carried out on salmon *(S. salar)* over a 5.5-month period between November 11 and May 5. The test was carried out in vessels having a diameter of 1 metre. The vessels were filled with seawater and the water temperature varied between 8 and 12°C in the period. There were 34-35 fish in each vessel. Mean weight at start was 118g. The control group consisted of three vessels, while each test group consisted of one vessel.

Table 1 shows the composition of the control feed.

**Table 1. Recipe for control feed, formulated to contain 15, 30 and 45 ppm of astaxanthin.**

| **Raw material** | **Amount (%)** |
|---|---|
| Soy protein concentrate, Imcopa | 15.9 |
| Wheat | 16.2 |
| Wheat gluten | 7.1 |
| Fish meal, south American LT | 38.2 |
| Fish oil, nordic | 22.4 |
| Betafin | 0.042 |
| Lutavit C Aquastab 35 % | 0.014 |
| Mineral mix | 0.1 |
| Vitamin mix | 0.1 |
| Carophyll Pink¹⁾ | 0.015; 0.030; 0.045 |

| | |
|---|---|
| ¹⁾ Contains a minimum of 10% pure astaxanthin | |

The feeds had the following main component composition: 43.5 % protein; 27.7% fat; 7.8% water and 8.0% ash.

There was produced feed having three different levels of astaxanthin, 15, 30 and 45 mg astaxanthin/kg respectively, both of the control feeds and the test feeds, by that different amounts of Carophyll Pink were added to the meal mixture before extrusion.

Adding gallic acid into the meal mix to the same recipe as the control feeds provided the test feeds. Gallic acid was added in four levels to the test feeds, low, medium, high and very high, respectively. Low level corresponds to an inclusion level of between 10 and 75 ppm, represented in the examples with an inclusion level of 15 ppm, medium level corresponds to an inclusion level of between 76 and 750 ppm, represented in the examples with an inclusion level of 400 ppm, high level corresponds to an inclusion level of between 751 and 1500 ppm, represented in the example with an inclusion level of 1200 ppm, and very high level corresponds to an inclusion level of over 1500 ppm, represented in the example with an inclusion level of 3600 ppm.

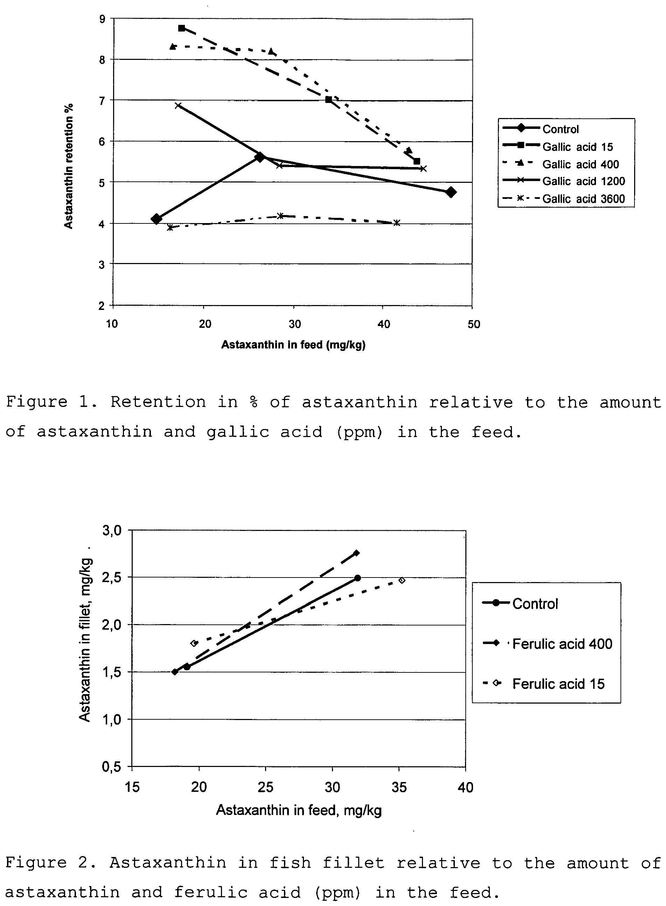

At the termination of the test the fish weighed in average 557 g. SGR was between 0.84 %/d and 0.89 %/d. The fish was filleted and the fillets were analysed for chemical astaxanthin in duplicates of pooled samples of fillets. Astaxanthin was analysed with HPLC according to a method developed by Roche with modifications. The results are shown in figure 1.

As shown in figure 1 the retention of astaxanthin was relatively constant when the level varied between 15 and 40 ppm of astaxanthin in the control feed. It is known that retention of astaxanthin decreases with increasing amount of astaxanthin, particularly at levels from 40 ppm upwards (Ytrestøyl et al., 2008. Utilisation of astaxanthin in Atlantic salmon from seawater transfer to slaughter. XIII International Symposium on Fish Nutrition and Feeding. June 1-5'th.). The results further indicate that high inclusion levels of gallic acid hamper the retention of astaxanthin. Addition of gallic acid to a very high level gives a worse retention than at the other tested levels. This may be due to gallic acid at this level behaving like a pro-oxidant. This phenomenon is described by Edwin N. Frankel, 2007, Antioxidants in Food and Biology, The Oily Press, 2007.

The test shows surprisingly that the lowest inclusion level of gallic acid has equally good effect on the retention of astaxanthin as a medium level. It is also clear that this effect is largest at low levels of astaxanthin in the feed since there is little difference in the retention when the astaxanthin content in the feeds is approx. 40 ppm. Without being bound by this as a theory, the inventor assumes that the observed effects may be due to that the added antioxidant either reduces the need for astaxanthin or replaces some of the biological functions of the astaxanthin in the maintenance functions that astaxanthin might have at lower levels of astaxanthin.

The test showed that the retention of astaxanthin increased considerably at low levels of astaxanthin in the feed. Levels of 15 - 20 ppm astaxanthin in the feed are believed to be a maintenance level, i.e. that the fish maintains the level of astaxanthin in the muscle when it grows. Levels of 20 - 70 ppm are believed to be a colorization level, i.e. that the fish increases the level of astaxanthin in the muscle when it grows and the meat thereby becomes stronger red. By utilising the invention the amount of astaxanthin in the feed may be reduced to maintain the pigment level in the muscles. By utilising the invention there may also be used a lower astaxanthin level in the feed then what is otherwise normal, to improve the reddish colour in the muscle. Both utilisations will give considerable savings in the pigment cost.

### Example 2

The test was carried out with salmon *(S. salar)* from May 4^{th} to August 20^{th}. The test was carried out in vessels having a diameter of 1 metre. The vessels were filled with seawater and the water temperature varied between 8.3 and 11.8°C in the period. There were 30 fish in each vessel having a mean weight of 0.2kg at the start. The control group consisted of two vessels per diet, while the test group consisted of one vessel at medium inclusion of ferulic acid and two vessels per diet at low inclusion of ferulic acid.

**Table 2. Composition of control feed formulated to contain 20 ppm and 40 ppm of astaxanthin.**

| **Raw material** | **Inclusion (%)** |
|---|---|
| Wheat | 13.7 |
| Wheat gluten | 10.9 |
| Fish meal, South American LT | 38.0 |
| Soy protein concentrate, Imcopa | 13.4 |
| Fish oil, nordic | 23.7 |
| Minerals and vitamins | 0.3 |
| Carophyll Pink¹⁾ | 0.020; 0.040 |

| | |
|---|---|
| ¹⁾ Contains a minimum of 10% pure astaxanthin | |

The feed had the following main component composition: 44.5% protein; 28.2% fat; 7.6% water and 7.2% ash.

The test feed had the same composition as shown in table 2 and had in addition added ferulic acid as dry powder in meal mix before extrusion. Ferulic acid was added at two levels: low and medium, where the levels are defined as in example 1.

Each feed was formulated with two levels of astaxanthin, 20 and 40 mg/kg.

At the termination of the test the fish weighed 0.7 kg as an average. The fish showed growth as expected in that the feed conversion factor was between 0.84 and 0.88, while the SGR was between 1.10 %/d and 1.21 %/d. The fish was filleted and the fillet analysed for astaxanthin. Thirty fish per vessel was analysed individually with NIR. The results are shown in figure 2. Figure 2 shows actual analysed values for astaxanthin in the different feeds.

The test showed as expected that the amount of chemical astaxanthin increased in the muscles with increased amount of astaxanthin in the feed in this inclusion interval. Addition of a low level of ferulic acid had a favourable effect on the retention of astaxanthin when the feed contained less than 20 ppm of astaxanthin. Addition of a medium level of ferulic acid had a favourable effect on the retention of astaxanthin when the feed contained more than 30 ppm of astaxanthin.

### Example 3

The test was carried out with salmon *(S. salar)* from May 4^{th} to August 20^{th}. The test was carried out in vessels having a diameter of 1 metre. The vessels were filled with seawater and the water temperature varied between 8.3 and 11.8°C in the period. There were 30 fish in each vessel having a mean weight of 0.2kg at the start. The control group consisted of two vessels per diet, while the test group consisted of one vessel at medium inclusion of syringic acid and two vessels per diet at low inclusion of syringic acid.

Table 3 shows the composition of the control feeds.

**Table 3. Composition of control feed formulated to contain 20 ppm and 40 ppm of astaxanthin.**

| **Raw material** | **Inclusion (%)** |
|---|---|
| Wheat | 13.7 |
| Wheat gluten | 10.9 |
| Fish meal, South American LT | 38.0 |
| Soy protein concentrate, Imcopa | 13.4 |
| Fish oil, nordic | 23.7 |
| Minerals and vitamins | 0.3 |
| Carophyll Pink¹⁾ | 0.020; 0.040 |

| | |
|---|---|
| ¹⁾ Contains a minimum of 10% pure astaxanthin | |

The feed had the following main component composition: 44.3% protein; 28.4% fat; 7.5% water and 7.2% ash.

To the control feed syringic acid as dry powder was added in meal mix prior to extrusion. Syringic acid was added at two levels: low and medium, where the levels are defined as in example 1.

Each feed was formulated with two levels of astaxanthin, 20 and 40 mg/kg.

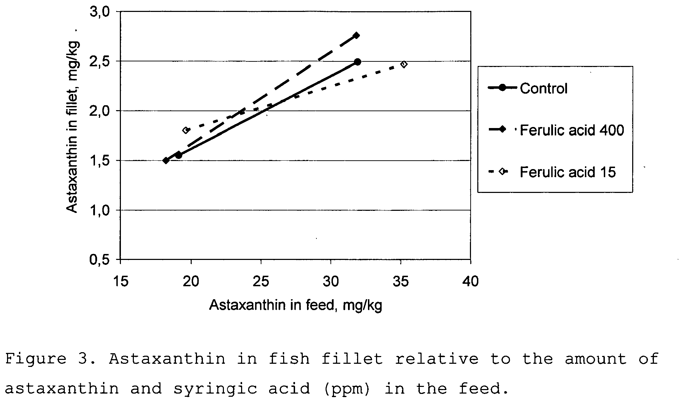

At the termination of the test the fish weighed 0.7kg. The fish had shown growth as expected in that the feed conversion factor was between 0.84 and 0.86, while the SGR was between 1.10 %/d and 1.21 %/d. The fish was filleted and the fillet analysed for astaxanthin (30 fish per vessel was analysed individually with NIR). The results are shown in figure 3. Figure 3 shows actual analysed values for astaxanthin in the different feeds.

## Claims

1. Extruded, formulated fish feed containing less than 10 percent by weight of ash, more than 20 percent by weight of fat, less than 20 percent by weight of a starch-containing raw material, and astaxanthin, **characterised in that** the fish feed contains at least one water-soluble antioxidant selected from a group consisting of gallic acid and syringic acid, wherein the water-soluble antioxidant is present in an amount from 10 to 75 ppm or an amount from 76 to 750 ppm based on the total weight of the feed, and wherein the fish feed contains from 10 to 40 mg of astaxanthin per kg feed.

2. Fish feed in accordance with claim 1, **characterised in that** said fish feed contains more than 25 percent by weight of fat.

3. Method to increase the retention of pigment in a meat of salmonids, where the method consists of providing a fish feed containing less than 10 percent by weight of ash, more than 20 percent by weight of fat, less than 20 percent by weight of a starch-containing raw material, and astaxanthin, **characterised by** that the fish feed is supplemented with at least one water-soluble antioxidant selected from a group consisting of gallic acid and syringic acid, wherein the water-soluble antioxidant is present in an amount from 10 to 75 ppm or an amount from 76 to 750 ppm based on the total weight of the feed, and that the fish feed is further supplemented with from 10 to 40 mg of astaxanthin per kg of fish feed, and the feed is fed to said salmonid fish in order to increase the retention of astaxanthin in the meat.

## Patentansprüche

1. Extrudiertes, formuliertes Fischfutter beinhaltend weniger als 10 Gewichtsprozente an Asche, mehr als 20 Gewichtsprozente an Fett, weniger als 20 Gewichtsprozente an Stärke beinhaltendem Rohmaterial, und Astaxanthin,
**dadurch gekennzeichnet, dass** das Fischfutter mindestens ein wasserlösliches Antioxidationsmittel ausgewählt aus der Gruppe bestehend aus Gallussäure und Syringasäure enthält, wobei das wasserlösliche Antioxidationsmittel in einer Menge von 10 bis 75 ppm oder einer Menge von 76 bis 750 ppm basierend auf dem Gesamtgewicht des Futters vorliegt, und wobei das Fischfutter 10 bis 40 mg Astaxanthin pro kg Futter enthält.

2. Fischfutter gemäss Anspruch 1,**dadurch gekennzeichnet, dass** das besagte Fischfutter mehr als 25 Gewichtsprozente an Fett enthält.

3. Verfahren zur Erhöhung der Retention von Pigment im Fleisch von Lachsfischen, wobei das Verfahren besteht aus Bereitstellen eines Fischfutters, welches weniger als 10 Gewichtsprozente an Asche, mehr als 20 Gewichtsprozente an Fett und weniger als 20 Gewichtsprozente an Stärke beinhaltendes Rohmaterial, und Astaxanthin aufweist, **dadurch gekennzeichnet, dass** das Fischfutter mit mindestens einem wasserlöslichen Antioxidationsmittel ausgewählt aus der Gruppe bestehend aus Gallussäure und Syringasäure supplementiert ist, wobei das wasserlösliche Antioxidationsmittel in einer Menge von 10 bis 75 ppm oder 76 bis 750 ppm basierend auf dem Gesamtgewicht des Futters vorliegt, und dass das Fischfutter weiter mit 10 bis 40 mg Astaxanthin pro kg Fischfutter supplementiert ist, und das Futter den besagten Lachsfischen verfüttert wird, um die Retention von Astaxanthin im Fleisch zu erhöhen.

## Revendications

1. Un aliment pour poissons extrudé et formulé, contenant moins de 10 pourcent en poids de cendres, plus de 20 pourcent en poids de matière grasse, moins de 20 pourcent en poids de matériau brut contenant de l'amidon, et d'astaxanthine, **caractérisé en ce que** l'aliment pour poissons contient au moins un antioxydant hydrosoluble choisi dans le groupe constitué d'acide gallique et d'acide syringique, dans lequel l' antioxydant hydrosoluble est présent dans une quantité de 10 à 75 ppm ou dans une quantité de 76 à 750 ppm en fonction du poids total de l'aliment, et dans lequel l'aliment pour poissons contient de 10 à 40 mg d'astaxanthine par kg d'aliment.

2. Un aliment pour poissons selon la revendication 1, **caractérisé en ce que** ledit aliment pour poissons contient plus de 25% en poids de matière grasse.

3. Un procédé pour augmenter la rétention de pigment dans la chair de salmonidés, où le procédé consiste à fournir un aliment pour poissons contenant moins de 10 pourcent en poids de cendres, plus de 20 pourcent en poids de matière grasse, moins de 20 pourcent en poids de matériau brut contenant de l'amidon, et d'astaxanthine, **caractérisé en ce que** l'aliment pour poissons est supplémenté d'au moins un antioxydant hydrosoluble choisi dans le groupe constitué d'acide gallique et d'acide syringique, dans lequel l'antioxydant hydrosoluble est présent dans une quantité de 10 à 75 ppm ou dans une quantité de 76 à 750 ppm en fonction du poids total de l'aliment, et que l'aliment pour poissons est en outre supplémenté de 10 à 40 mg d'astaxanthine par kg d'aliment pour poisson, et lesdits poissons salmonidés sont nourris à l'aliment pour ainsi augmenter la rétention d'astaxanthine dans la chair.
